Europäisches Patentamt

European Patent Office

Office européen des brevets

(19)

(11) Veröffentlichungsnummer: **0 037 114 B1**

(12) # EUROPÄISCHE PATENTSCHRIFT

(45) Veröffentlichungstag der Patentschrift:
13.11.85

(51) Int. Cl.⁴: **H 02 P 5/16, H 02 P 7/00**

(21) Anmeldenummer: 81102395.1

(22) Anmeldetag: 30.03.81

(54) **Schaltungsanordnung zur Drehzahlregelung von Kollektormotoren.**

(30) Priorität: 31.03.80 DE 3012558

(43) Veröffentlichungstag der Anmeldung:
07.10.81 Patentblatt 81/40

(45) Bekanntmachung des Hinweises auf die Patenterteilung:
13.11.85 Patentblatt 85/46

(84) Benannte Vertragsstaaten:
DE FR GB IT SE

(56) Entgegenhaltungen:
CH - A - 570 736
DE - B - 1 588 471

ELECTRONICS, Band 52, Nr. 20, 1979, T. SLADE
″Microcomputer-based control smoothes universal
motor performance″, Seiten 140 bis 144
TOUTE L'ELECTRONQIUE, Nr. 433, Juni 1978,
APPLICATION FAIRCHILD ″Commande de vitesse par
circuit intégré″, Seite 76

(73) Patentinhaber: Siemens Aktiengesellschaft, Berlin und
München Wittelsbacherplatz 2, D-8000 München 2 (DE)

(72) Erfinder: Wetzel, Klaus, Ing. grad.,
Schwingensteinweg 14, D-8000 München 83 (DE)

EP 0 037 114 B1

## Beschreibung

Die Erfindung betrifft eine Schaltungsanordnung gemäß dem Oberbegriff des Anspruchs 1. Eine solche Anordnung ist aus der DE-B2-1 588 471 bekannt.

In verschiedenen elektromechanischen Geräten und insbesondere in Haushaltsgeräten werden beim Betrieb mehrere Drehzahlen der verwendeten Motore benötigt. Diese einzelnen Drehzahlen müssen im allgemeinen noch geregelt werden.

Die besonders billigen Wechselstrom- bzw. Gleichstromkollektormotoren, die in der Regel eine Anker- und eine Feldwicklung aufweisen, können bisher für den genannten Zweck im allgemeinen nicht verwendet werden.

Dies ist darauf zurückzuführen, daß die Drehzahl dieser Motoren neben einer Motorenkonstante (Ankerzweige, Polpaare) im wesentlichen von der Feldstärke und von der Klemmenspannung abhängt. Eine Drehzahländerung läßt sich dadurch erzielen, daß man entweder die Feldstärke oder vorzugsweise die Ankerspannung variiert. Da aber die Anker- und die Feldwicklung bei Kollektormotoren in Reihe oder parallel geschaltet sind, bleibt für eine Drehzahl-Variation nur die Änderung der Klemmenspannung. Da hierbei der Einfluß der Anker- und der Feldwicklung gegenläufig ist, läßt sich mit der Variation der Klemmenspannung nur eine sehr begrenzte Drehzahländerung erreichen, wenn wesentliche Motoreigenschaften wie beispielsweise das Anzugsmoment erhalten bleiben sollen.

Bei Antrieben, die eine große Drehzahl-Variation des verwendeten Motors voraussetzen, wie es beispielsweise in Haushaltsgeräten der Fall ist, konnte deshalb bisher nicht auf die preisgünstigen Kollektormotoren zurückgegriffen werden. Vielmehr wurde das Problem durch den Einsatz von polumschaltbaren Asynchronmotoren gelöst. Die verschiedenen Drehzahlstufen konnten beispielsweise durch Umschalten der Polpaare erzielt werden. Asynchronmotore sind jedoch sehr aufwendig, für die Umschaltung werden mehrpolige Schalter benötigt. Bei Geräten mit besonders hoher Drehzahl-Variation, beispielsweise Waschmaschinen, in denen immer höhere Schleuderdrehzahlen eingesetzt werden, ist das Verhältnis der vorgegebenen Drehzahlen mit bis zu 1 : 50 so groß, daß in Verbindung mit polumschaltbaren Asynchronmotoren automatische Fliehkraftkupplungen ein zusätzliches mechanisches Getriebe einschalten, was einen beträchtlichen Aufwand an Bauelementen und Schaltungsanordnungen erfordert.

Weiterhin ist es bekannt, für den genannten Zweck Doppelmotore einzusetzen. Hierbei wird für die niedrige Drehzahl meist ein Asynchonmotor verwendet, während auf derselben Achse für die hohen Drehzahlen ein Reihenschluß-Universalmotor Verwendung findet, der in einem kleinen Bereich über die Klemmenspannung geregelt wird. Auch diese Ausgestaltung setzt einen beträchtlichen Geräteaufwand voraus.

Der Aufwand wird zweifellos geringer, wenn man, entsprechend der eingangs zitierten Druckschrift, für Anker- und Feldwicklung getrennte Leistungsstromkreise vorsieht, die Wicklungsspannungen jeweils über gepulste Leistungsschalter kontrolliert und dabei die Solldrehzahlen über vorgegebene Pulsfolgen des Feldwicklungsschalters bestimmt und Abweichungen über Pulsfolgeänderungen im Ankerwicklungsschalter abgleicht. Die DE-B2-1 588 471 läßt allerdings offen, wie die Schaltungsanordnung auszubilden ist, damit sie nicht nur nach Erreichen der Solldrehzahl stabil bleibt, sondern auch beim Anfahren über ein hohes Anzugsmoment verfügt.

Aufgabe der vorliegenden Erfindung ist es, die Schaltungsanordnung der eingangs genannten Art mit schaltungstechnisch einfachen Mitteln derart weiterzubilden, daß sie die beiden letztgenannten Forderungen erfüllt und überdies eine geringe Regelzeitkonstante besitzt. Diese Aufgabe wird erfindungsgemäß durch eine Schaltung mit den Merkmalen des Patentanspruchs 1 gelöst. Vorteilhafte Ausgestaltungen und Weiterbildungen der Erfindung sind Gegenstand der Unteransprüche.

Mit der erfindungsgemäßen Schaltungsanordnung werden die Vorteile erzielt, daß durch eine unterschiedliche und je nach Programmablauf angepaßte Ansteuerung des Leistungskreises, beispielsweise durch Phasenschnitt bzw. ein Taktverhältnis, die spezifischen Eigenschaften eines Nebenschluß- und eines Reihenschlußmotors positiv verknüpft werden. Zum Anfahren wird durch eine vestärkte Erregung (Feld) ein hohes Anzugsmoment (Reihenschluß) erzielt, während für die konstanten Drehzahlen die drehzahlstabilen Eigenschaften des Nebenschlußmotors benutzt werden. Somit gestattet die erfindungsgemäße Schaltungsanordnung, mit elektronischen Mitteln die Drehzahl von Kollektormotoren zu ändern und zu regeln, wobei die typischen Charakteristika dieser Motore (Reihenschluß- bzw. Nebenschlußeffekt) über einen großen Drehzahlbereich erhalten bleiben.

Die Vorteile der Erfindung werden im folgenden anhand eines Ausführungsbeispiels näher erläutert. In der dazugehörigen Zeichnung zeigt

Fig. 1 einen Nebenschluß-Kollektormotor,

Fig. 2 einen Reihenschluß-Kollektormotor,

Fig. 3 eine erfindungsgemäße Schaltungsanordnung zur Ansteuerung von Kollektormotoren und

Fig. 4 ein Diagramm des Phasenanschnittwinkels bei einer bestimmten Motordrehzahl n.

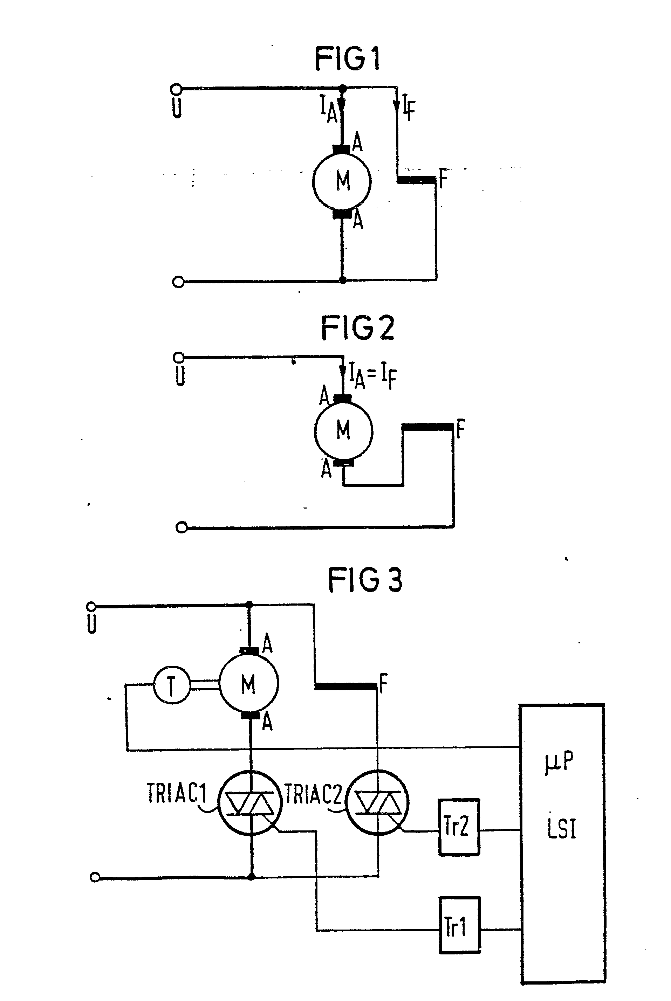

In der Fig. 1 ist das Schaltbild eines Nebenschluß-Kollektormotors M mit der Ankerwicklung A und der parallel geschalteten Feldwicklung F sowie den Strömen $I_A$ bzw. $I_F$ dargestellt. Für Drehzahländerungen über eine Änderung der Betriebsspannung U ist dieser Motor nicht besonders geeignet, da die gleichzeitige Einwirkung auf die Ankerwicklung A und die Feldwicklung F eine gegenläufige Wirkung erzielt.

In der Fig. 2 ist das Schaltbild eines Hauptschluß-Kollektormotors M dargestellt, bei dem die Ankerwicklung A und die Feldwicklung F in Reihe geschaltet sind. Hierbei entspricht der Strom durch die Ankerwicklung $I_A$ dem Strom durch die Feldwicklung $I_F$. Derartige Motoren werden heute im allgemeinen für Drehzahländerungen über einen Phasenanschnitt der Betriebsspannung U verwendet, da die Feldstärke vorwiegend duch den Ankerstrom $I_A$ bestimmt ist. Hohe Drehzahländerungen lassen sich jedoch nicht verwirklichen, da bei niedrigen Drehzahlen, das heißt bei sehr hohen Phasenanschnittwinkeln, sehr hohe Spitzenaufnahmeströme bei hohen Drehmomenten resultieren. Müssen deshalb niedrige Drehzahlen geregelt werden, wie dies beispielsweise in Waschmaschinen der Fall ist, schränken die hohen Anforderungen an den Regler wegen der geringen Regelabweichung das Verhältnis maximaler zu minimaler Drehzahl stark ein.

In der Fig. 3 ist eine erfindungsgemäße Schaltungsanordnung zur Ansteuerung eines Kollektormotors M mit der Ankerwicklung A und der parallel geschalteten Feldwicklung F dargestellt. Die Ankerwicklung A und die Feldwicklung F werden dabei über getrennte Leistungsstromkreise über zwei Triacs, Triac 1 und Triac 2, angesteuert. Die Ansteuerung der Triacs geschieht dabei entweder durch einen Mikroprozessor µP oder digital arbeitende Steuer- und Regelkreise (LSI-Baustein), beispielsweise über zwei Treiber Tr 1 und Tr 2. Der Mikroprozessor µP bzw. die Schaltkreise LSI können auch für weitere Funktionen des Gerätes verwendet werden. Die Drehzahlregelung des Motors M erfolgt über den Tachogenerator T. Für viele Anwendungsfälle kann dabei der Tachogenerator T entfallen, wenn ein günstiger Phasenanschnittwinkel für eine bestimmte Solldrehzahl gewählt ist. Im Einschaltmoment werden beide Wicklungen A und F an volle Spannung gelegt und anschließend, bis die jeweilige Solldrehzahl erreicht wird, die Spannung in der Feldwicklung F durch Phasenanschnitt bis zu einem Wert, der durch eine Sollwertvorgabe markiert ist, zurückgenommen. Falls danach die Drehzahl noch weiter steigen sollte, beispielsweise infolge Entlastung oder Betriebsspannungserhöhung, erfolgt die Ausregelung über Phasenanschnitt der Ankerwicklung A.

Die Vorgaben für die erforderlichen Phasenanschnittwinkel und phasenrichtigen Zündungen der Leistungsschalter sind im Programmspeicher des Mikroprozessors µP bzw. des anwendungsspezifischen Schaltkreises enthalten und können mit den bekannten Möglichkeiten der jeweiligen Anwendung angepaßt werden.

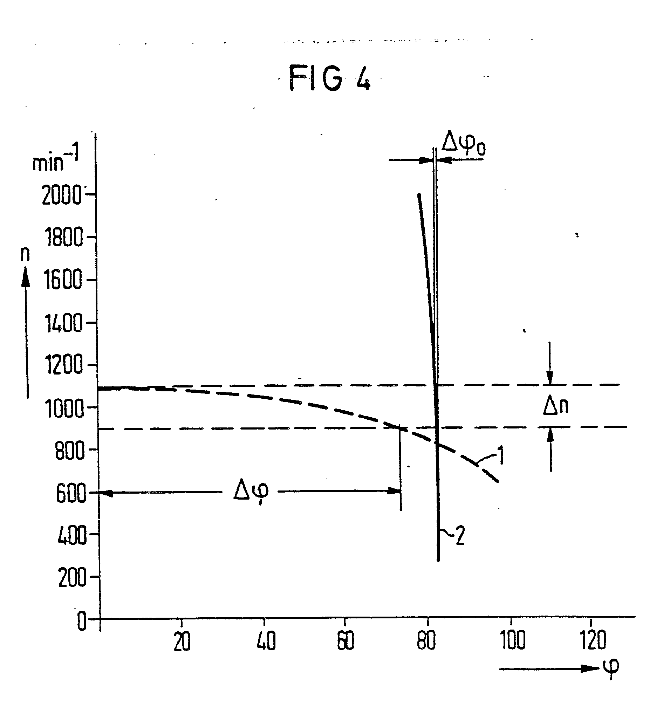

In der Fig. 4 ist ein Diagramm des Phasenanschnittwinkels $\varphi$ über die Motordrehzahl n dargestellt. Das Diagramm zeigt dabei den erforderlichen Phasenanschnittwinkel $\varphi$ für einen Waschmaschinen-Motor, wobei eine Waschdrehzahl von 1000 min$^{-1}$ mit einer maximalen Abweichung $\Delta$ n von ±10% vorgegeben ist. Die gestrichelte Kurve 1 entspricht dabei der erfindungsgemäßen Schaltungsanordnung, das heißt, wenn erfindungsgemäß der jeweiligen Solldrehzahl die Feldstärke angepaßt ist, wogegen die ausgezogene Kurve 2 der herkömmlichen Schaltung eines Reihenschluß-Kollektormotors entspricht, bei dem die Feldwicklung in Reihe zur Ankerwicklung liegt. Bei der erfindungsgemäßen Schaltungsanordnung ist die mögliche Regelabweichung $\Delta\varphi$ des Phasenanschnittwinkels $\varphi$ ganz erheblich vergrößert gegenüber der möglichen Regelabweichung $\Delta\varphi_0$, wenn ein Reihenschluß-Kollektormotor mit herkömmlicher Schaltung eingesetzt wird. Die erfindungsgemäße Schaltungsanordnung gestattet somit eine deutliche Vergrößerung der ausnutzbaren Regelabweichung und gestattet somit den Einsatz einfacherer Regelkreise bzw. den Ersatz der Regelung durch eine Steuerung. Diese Eigenschaft kommt besonders den digital arbeitenden Steuer- und Regelkreisen (LSI-Bausteine) entgegen. Aus der Fig. 4 ist ferner offensichtlich entnehmbar, daß bei der herkömmlichen Verwendung von Kollektormotoren, wie bereits weiter oben erwähnt, durch die äußerst geringe mögliche Regelabweichung $\Delta\varphi_0$ äußerst hohe Anforderungen an den Regler erforderlich sind und zudem das Verhältnis maximaler zu minimaler Drehzahl stark eingeschränkt ist.

Durch die erfindungsgemäße Doppelansteuerung kann vor allem bei Waschmaschinen die besonders unterschiedliche Solldrehzahl von bis 1 : 50 (Parkdrehzahl des Motors 240 min$^{-1}$, Schleuderdrehzahl des Motors 12 800 min$^{-1}$) mit einem einzigen Kollektormotor bewältigt werden.

Der für die Regelung erforderliche zusätzliche zweite Leistungsschalter für die Feldwicklung (Triac 2 im Ausführungsbeispiel gemäß Fig. 3) kann zusätzlich für eine Schutzabschaltung des Motors M herangezogen werden. Motorantriebe, welche über Phasenanschnittsteuerungen geregelt werden, müssen nämlich gegen einen Kurzschluß des Leistungsschalters geschützt werden. In der Regel ist daher eine aufwendige Schutzrelaisbeschaltung erforderlich. Wenn dagegen zwei Leistungsschalter (Triac 1 und Triac 2) verwendet werden, können im Störungsfall auch beide abgeschaltet werden. Die Sicherung ist somit auch dann wirksam, wenn einer der Schalter zerstört sein sollte.

**Patentansprüche**

1. Schaltungsanordnung zur Drehzahlregelung eines Kollektormotors mit mehreren vorgegebenen Drehzahlen (Solldrehzahlen), insbesondere in Haushaltsgeräten, mit folgenden Merkmalen:

a)   die Ankerwicklung (A) und die Feldwicklung (F) des Motors (M) liegen in getrennten Leistungsstromkreisen,

b) die Spannung an jeder Wicklung wird jeweils durch einen Leistungsschalter (TRIAC 1, TRIAC 2) bestimmt, der sich im Leistungsstromkreis der Wicklung befindet und pulsweise angesteuert wird,

c) den Solldrehzahlen sind jeweils feste Pulsfolgen des Leistungsschalters im Feldwicklungskreis (Feldwicklungsschalter, TRIAC 2) zugeordnet,

d) Abweichungen von den Solldrehzahlen werden durch Änderungen der Pulsfolge des Leistungsschalters im Ankerwicklungskreis (Ankerwicklungsschalter, TRIAC 1) ausgeregelt;

dadurch gekennzeichnet, daß

e) im Einschaltmoment beide Wicklungen (A, F) die volle Spannung erhalten,

f) anschließend die Spannung an der Feldwicklung (F) durch eine Pulsfolgeänderung des Feldwicklungsschalters (TRIAC 2), die durch eine Änderung des Phasenanschnittwinkels oder des Tastverhältnisses erfolgt, bis zu einem der Solldrehzahl zugeordneten Sollwert zurückgenommen wird, und daß

g) danach eine weitere Drehzahlzunahme durch eine Pulsfolgeänderung des Ankerwicklungsschalters (TRIAC 1), die durch eine Änderung des Phasenanschnittwinkels oder des Tastverhältnisses erfolgt, ausgeregelt wird.

2. Schaltungsanordnung nach Anspruch 1, dadurch gekennzeichnet, daß zur Ausregelung ein Tachogenerator (T) verwendet wird.

3. Schaltungsanordnung nach Anspruch 1 oder 2, dadurch gekennzeichnet, daß die Leistungsschalter (TRIAC 1, TRIAC 2) durch einen Mikroprozessor (µP) angesteuert werden.

4. Schaltungsanordnung nach Anspruch 1 oder 2, dadurch gekennzeichnet, daß die Leistungsschalter (TRIAC 1, TRIAC 2) durch einen digital arbeitenden, zu einem Baustein integrierten Steuer- und Regelkreis (LSI) angesteuert werden.

## Claims

1. A circuit arrangement for regulating the speed of a cummutator to a plurality of predetermined speeds (theoretical speeds), in particular in household devices, with the following features:

a) the armature winding (A) and the field winding (F) of the motor (M) are located in separate power circuits;

b) the voltage connected to each winding is determined by a power switch (TRIAC 1, TRIAC 2) located in the energising circuit of the winding and driven by pulses;

c) the theoretical speeds are each assigned fixed pulse sequences of the power switch in the field winding ciruit (field winding switch, (TRIAC 2);

d) deviations from the theoretical speeds are compensated by changes in the pulse sequence of the power switch in the armature winding circuit (armature winding switch (TRIAC 1);

characterised in that

e) at the moment of switch-on both windings (A, F) receive the full voltage;

f) the voltage connected to the field winding (F) is then set to a theoretical value, assigned to the theoretical speed, by changing the pulse sequence of the field winding circuit (TRIAC 2) as a result of a change in the operating angle or the pulse duty factor; and that

g) a further increase in speed is then compensated by a change in the pulse sequence of the armature winding switch (TRIAC 1) as a result of a change in the operating angle or the pulse duty factor.

2. A circuit arrangement as claimed in Claim 1, characterised in that a tachometer generator (T) is used for compensation.

3. A circuit arrangement as claimed in Claim 1 or 2, characterised in that the power switches (TRIAC 1, TRIAC 2) are driven by a microprocessor µP).

4. A circuit arrangement as claimed in Claim 1 or 2, characterised in that the power switches (TRIAC 1, TRIAC 2) are driven by a digitally operating control and regulating circuit (LSI) integrated to form one module.

## Revendications

1. Montage pour régler la vitesse de rotation d'un moteur à collecteur à plusieurs vitesses de rotation prédéterminées (vitesses de rotation de consigne), en particulier pour des appareils ménagés, présentant les particularités suivantes:

a) l'enroulement d'induit (A) et l'enroulement de champ (F) du moteur (M) sont situés dans des circuits de puissance distincts,

b) la tension au niveau de chaque enroulement est déterminée par un commutateur de puissance (TRIAC 1, TRIAC 2) qui se trouve dans le circuit de puissance de l'enroulement et qui est attaqué de façon impulsionnelle,

c) aux vitesses de rotation de consigne sont respectivement associés des trains d'impulsions fixes du commutateur de puissance situé dans le circuit de l'enroulement de champ (commutateur de l'enroulement de champ, (TRIAC 2),

d) des écarts par rapport aux vitesses de rotation de consigne sont compensés par des modifications du train d'impulsions du commutateur de puissance situé dans le circuit de l'enroulement d'induit (commutateur de l'enroulement d'induit (TRIAC 1);

caractérisé par le fait que

e) à l'instant du branchement, les deux enroulements (A, F) reçoivent la pleine tension,

f) ensuite, la tension au niveau de l'enroulement de champ (F) est réduite à une valeur de consigne associée à la vitesse de rotation de consigne, par une modification du train d'impulsions du commutateur (TRIAC 2) de l'enroulement de champ, et qui est effectuée par une modification de l'angle de flux ou du taux d'impulsions, et que

g) on ajuste ensuite un second accroissement de la vitesse de rotation par une modification du train d'impulsions du commutateur (TRIAC 1) de l'enroulement d'induit, ayant lieu par une modification de l'angle de flux ou du taux d'impulsions.

2. Montage selon la revendication 1, caractérisé par le fait que pour le réglage on utilise une génératrice tachymétrique (T).

3. Montage selon la revendication 1 ou 2, caractérisé par le fait que les commutateurs de puissance (TRIAC 1, TRIAC 2) sont commandés par un microprocesseur (μP).

4. Montage selon la revendication 1 ou 2, caractérisé par le fait que les commutateurs (TRIAC 1, TRIAC 2) sont commandés par un circuit de commande et de régulation (LSI) intégré en un module et opérant par voie numérique.

## FIG 1

$I_A$  $I_F$

A

M

A

F

U

## FIG 2

U

$I_A = I_F$

A

M

A

F

## FIG 3

U

A

M

A

T

F

TRIAC1

TRIAC2

Tr2

Tr1

µP

LSI

## FIG 4